# EUROPEAN PATENT APPLICATION

(11) **EP 4 593 103 A1**
(43) Date of publication of application: **30.07.2025**
(21) Application number: 24875657.9
(22) Date of filing: 07.10.2024
(51) Int. Cl.: H01M 4/13, H01M 4/66, H01M 10/0562, H01M 4/02

(54) **CATHODE FOR LITHIUM SECONDARY BATTERY, AND LITHIUM SECONDARY BATTERY COMPRISING SAME**

(30) Priority: 30.10.2023 KR 20230146522
(71) Applicant: LG Energy Solution, Ltd., Seoul 07335 (KR)
(72) Inventor: KIM, Yeeun, Daejeon 34122 (KR); CHOI, Seong Won, Daejeon 34122 (KR); KIM, Ji Young, Daejeon 34122 (KR); LEE, Daejin, Daejeon 34122 (KR)
(74) Representative: Goddar, Heinz J.
(86) International application number: PCT/KR2024/015164
(87) International publication number: WO 2025/095377

(57) **Abstract**

A positive electrode for a lithium secondary battery and a lithium secondary battery comprising same, and more particularly to a positive electrode for a lithium secondary battery, wherein the positive electrode composite layer is configured to have a smaller area than the positive electrode current collector, and a lithium secondary battery comprising same.

## Description

### TECHNICAL FIELD

The present invention relates to a positive electrode for a lithium secondary battery and a lithium secondary battery comprising same, and more particularly to a positive electrode for a lithium secondary battery, wherein the positive electrode composite layer is configured to have a smaller area than the positive electrode current collector, and a lithium secondary battery comprising same.

This application claims the benefit of priority to Korean Patent Application No. 10-2023-0146522, filed October 30, 2023, the disclosures of which are incorporated herein by reference in their entirety.

### BACKGROUND ART

As the technological development and the demand for mobile devices increase, rechargeable secondary batteries are being used extensively as an energy source for a variety of mobile devices. Secondary batteries are also gaining attention as an energy source for electric and hybrid vehicles, which are being proposed as a way to solve air pollution from conventional gasoline and diesel vehicles.

Secondary batteries are categorized into coin-type batteries, cylindrical-type batteries, angular-type batteries, and pouch-type batteries, based on the shape of the battery case. Among them, pouch-type batteries are attracting a lot of attention because they use a pouch exterior material consisting of a metal layer (foil) and a multilayer film of synthetic resin coated on the upper and lower surfaces of the metal layer to form the exterior, which can significantly reduce the weight of the battery compared to cylindrical or angular-type batteries using a metal can or case, making it possible to reduce the weight of the battery, and they have the advantage of being able to change into various shapes.

Pouch-type batteries are typically manufactured by a process that activates the battery cell after the battery assembly process. The activation process typically involves pressurizing the battery cell with a jig and applying a current to the battery cell to charge and discharge it to a predetermined voltage.

In manufacturing a pouch-type battery, the cell assembly process may include subjecting the battery cell to high pressure under high temperature conditions. In particular, the process of manufacturing an all-solid-state cell may include a warm isostatic pressure (WIP) process, whereby the positive electrode and positive electrode current collector are assembled. In the isostatic pressure process, the area of the positive electrode composite layer is stretched, and the positive electrode composite layer has a larger area than the positive electrode current collector. The enlarged area of the positive electrode composite layer protrudes beyond the perimeter of the positive electrode current collector and bends along the surface of the positive electrode current collector, causing cracks. The problem with the above cracks is that when the cells are assembled together with the negative electrode, shorts can occur, which degrade the battery performance.

Therefore, to realize good performance of all-solid-state batteries, it is necessary to develop a positive electrode that prevents cracking of the electrode even after the isostatic pressure process.
(Patent Reference 1) Korean Laid-open Patent Publication No. 10-2023-0084872 (June 13, 2023)

### SUMMARY OF THE INVENTION

One of the objects of the present invention is to provide a positive electrode for a lithium secondary battery that prevents cracking of the electrode in a process in which high temperature and high pressure are applied in the manufacture of a lithium secondary battery.

Another object of the present invention is to provide a positive electrode for a lithium secondary battery that can prevent degradation of the performance and lifetime of the battery cell.

In one example of the present invention, there is provided a positive electrode for a lithium secondary battery comprising a positive electrode current collector, and a positive electrode composite layer laminated to the positive electrode current collector, wherein the positive electrode composite layer is configured to have a smaller area than the positive electrode current collector.

In one example of the present invention, there is provided a positive electrode for a lithium secondary battery, wherein the positive electrode composite layer has an area that is more than 0% to less than 30% smaller than the area of the positive electrode current collector.

In one example of the present invention, there is provided a positive electrode for a lithium secondary battery, wherein the positive electrode composite layer is spaced inwardly from at least one periphery of the positive electrode current collector.

In one example of the present invention, there is provided a positive electrode for a lithium secondary battery, wherein the positive electrode current collector comprises a laminated area in which the positive electrode composite layer is stacked and a surplus area in which the positive electrode composite layer is not stacked.

In one example of the present invention, there is provided a positive electrode for a lithium secondary battery, wherein the surplus area is disposed along at least a portion of a perimeter of the laminated area.

In one example of the present invention, there is provided a positive electrode for a lithium secondary battery, wherein the positive electrode current collector comprises a first side on which a positive electrode terminal portion is disposed, a second side opposite the first side, a third side and a fourth side connecting the first and second sides, and a surplus area formed to include at least one of the first to fourth sides.

In one example of the present invention, there is provided a positive electrode for a lithium secondary battery in which a center point of the positive electrode current collector is aligned with a center point of the positive electrode composite layer.

In one example of the present invention, there is provided a positive electrode for a lithium secondary battery, wherein the positive electrode composite layer comprises a positive electrode active material, a conductive material, and a binder.

In one example of the present invention, there is provided a positive electrode for a lithium secondary battery, wherein the positive electrode current collector is at least one metal selected from the group consisting of copper, aluminum, stainless steel, titanium, silver, palladium, nickel, alloys thereof, and combinations thereof.

In one example of the present invention, there is provided a lithium secondary battery comprising the positive electrode, negative electrode and solid electrolyte.

The present invention may provide a positive electrode for a lithium secondary battery that prevents cracking of the electrode in a process in which high temperature and high pressure are applied in the manufacture of a lithium secondary battery.

Another object of the present invention is to provide a positive electrode for a lithium secondary battery that can prevent degradation of the performance and lifetime of the battery cell.

### BRIEF DESCRIPTION OF DRAWINGS

FIGs. 1 and 2 are a plan view and a side view, respectively, schematically illustrating a positive electrode assembly of a positive electrode for a lithium secondary battery according to one example of the present invention.
FIG. 3 is a plan view schematically illustrating a positive electrode for a lithium secondary battery according to another embodiment of the present invention.
FIGs. 4 to 7 are plan views schematically illustrating a positive electrode composite layer in a positive electrode for a lithium secondary battery according to additional alternative embodiments of the present invention.

### DETAILED DESCRIPTION

Examples of the present invention will now be described in detail with reference to the accompanying drawings. The drawings may exaggerate all or part of the configuration for illustrative purposes only.

It will also be apparent to those skilled in the art that the invention is not limited to what is shown in the accompanying drawings or described herein, and that the invention may be implemented in various forms without departing from the technical ideas of the invention.

The process of manufacturing a lithium secondary battery, in particular, the process of manufacturing an all-solid-state battery may include a warm isostatic pressure (WIP) process. In the conventional process of positive electrode manufacture, the positive electrode composite layer and the positive electrode current collector have the same area, and when the positive electrode composite layer and the positive electrode current collector are subjected to the above warm isostatic pressure process, the area of the positive electrode composite layer is stretched, and the area of the positive electrode composite layer becomes larger than the area of the positive electrode current collector. The enlarged area of the positive electrode composite layer protrudes beyond the perimeter of the positive electrode current collector and bends along the surface of the positive electrode current collector, causing cracks. These cracks, when assembled with the negative electrode to manufacture the cell, can cause shorts, which can lead to poor battery performance and lifetime.

To solve this problem, the inventors of the present invention have completed a positive electrode for a lithium secondary battery that can prevent cracking of the positive electrode even after high-temperature and high-pressure processing.

Referring to the following drawings, prior to the specific description of the structure of a positive electrode for a lithium secondary battery according to one example of the present invention, the positive electrode assembly of the positive electrode for a lithium secondary battery will first be briefly described.

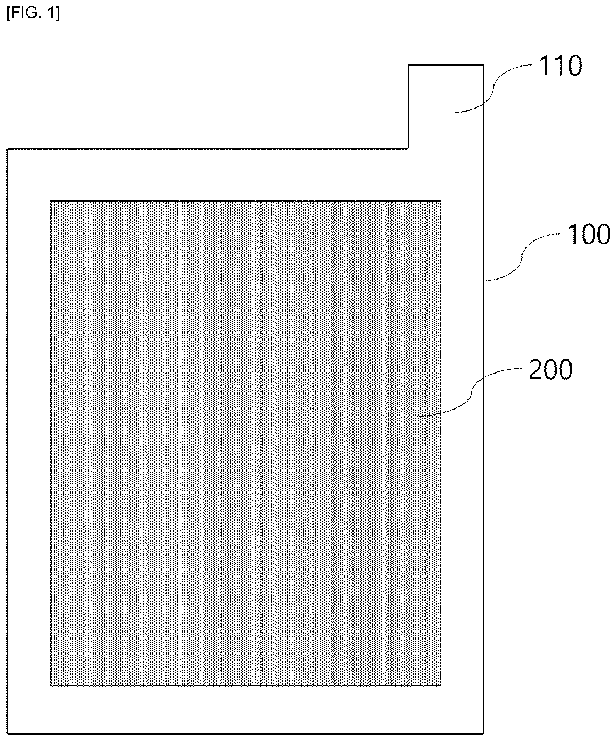

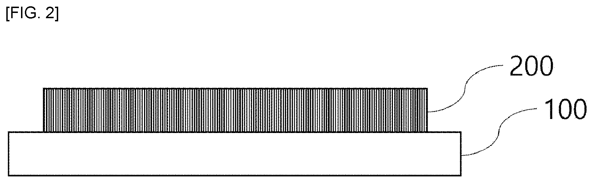

FIGs. 1 and 2 are drawings illustrating a positive electrode assembly of a positive electrode for a lithium secondary battery according to one example of the present invention.

The positive electrode for a lithium secondary battery may include a positive electrode current collector (100) and a positive electrode composite layer (200) laminated to the positive electrode current collector.

The positive electrode current collector may further comprise a positive electrode terminal portion (110) on one side. While FIG. 1 depicts the positive electrode terminal portion (110) as being connected to an end of one side of the positive electrode current collector, the location of the positive electrode terminal portion may be connected to any location on one side of the positive electrode current collector, without limitation.

The positive electrode composite layer (200) may be laminated to one side of the positive electrode current collector (100).

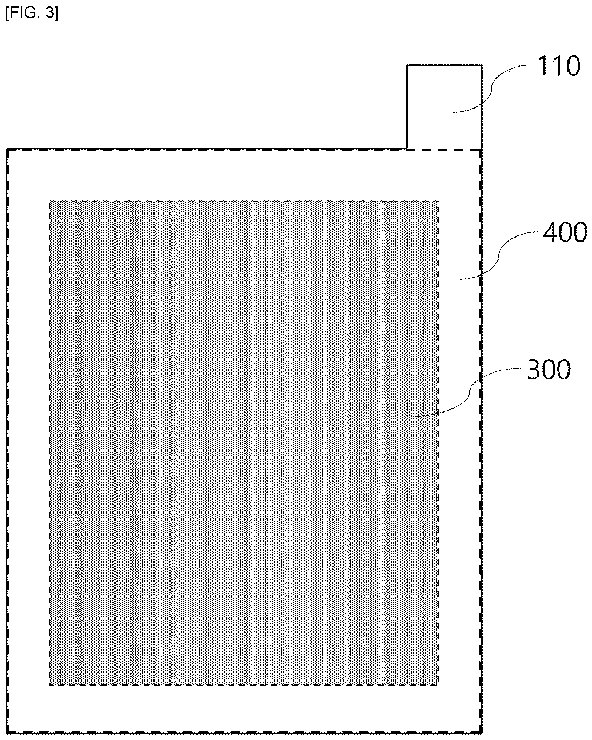

FIG. 3 is an illustration of a positive electrode for a lithium secondary battery according to another embodiment of the present invention.

In one example of the present invention, a positive electrode for a lithium secondary battery includes a positive electrode current collector, and a positive electrode composite layer laminated to the positive electrode current collector, wherein the positive electrode composite layer may have a smaller area than the positive electrode current collector.

The positive electrode composite layer has an area that is smaller than the area of the positive electrode current collector by more than 0% to less than 30%. More specifically, the positive electrode composite layer has an area that is smaller than the area of the positive electrode current collector by0.1% to less than 30%, 0.5% to less than 30%, 1.0% to less than 30%, 1.5% to less than 30%, 2.0% to less than 30%, 2.5% to less than 30%, 3.0% to less than 30%, 3.5% to less than 30%, 4.0% to less than 30%, 4.5% to less than 30%, 5.0% to less than 30%,
0.1% to 29.0% or less, 0.5% to 29.0% or less, 1.0% to 29.0% or less, 1.5% to 29.0% or less, 2.0% to 29.0% or less, 2.5% to 29.0% or less, 3.0% to 29.0% or less, 3.5% to 29.0% or less, 4.0% to 29.0% or less, 4.5% to 29.0% or less, 5.0% to 29.0% or less,
0.1% to 28.0% or less, 0.5% to 28.0% or less, 1.0% to 28.0% or less, 1.5% to 28.0% or less, 2.0% to 28.0% or less, 2.5% to 28.0% or less, 3.0% to 28.0% or less, 3.5% to 28.0% or less, 4.0% to 28.0% or less, 4.5% to 28.0% or less, 5.0% to 28.0% or less,
0.1% to 27.0% or less, 0.5% to 27.0% or less, 1.0% to 27.0% or less, 1.5% to 27.0% or less, 2.0% to 27.0% or less, 2.5% to 27.0% or less, 3.0% to 27.0% or less, 3.5% to 27.0% or less, 4.0% to 27.0% or less, 4.5% to 27.0% or less, 5.0% to 27.0% or less,
0.1% to 26.0% or less, 0.5% to 26.0% or less, 1.0% to 26.0% or less, 1.5% to 26.0% or less, 2.0% to 26.0% or less, 2.5% to 26.0% or less,3.0% or less to 26.0%, 3.5% or less to 26.0%, 4.0% or less to 26.0%, 4.5% or less to 26.0%, 5.0% or less to 26.0%,
0.1% or 25.0% or less, 0.5% to 25.0% or less, 1.0% to 25.0% or less, 1.5% to 25.0% or less, 2.0% to 25.0% or less, 2.5% to 25.0% or less, 3.0% to 25.0% or less, 3.5% to 25.0% or less, 4.0% to 25.0% or less, 4.5% to 25.0% or less, 5.0% to 25.0% or less,
0.1% to 24.0% or less, 0.5% to 24.0% or less, 1.0% to 24.0% or less, 1.5% to 24.0% or less, 2.0% to 24.0% or less, 2.5% to 24.0% or less, 3.0% to 24.0% or less, 3.5% to 24.0% or less, 4.0% to 24.0% or less, 4.5% to 24.0% or less, 5.0% to 24.0% or less,
0.1% to 23.0% or less, 0.5% to 23.0% or less, 1.0% to 23.0% or less, 1.5% to 23.0% or less, 2.0% to 23.0% or less, 2.5% to 23.0% or less, 3.0% to 23.0% or less, 3.5% to 23.0% or less, 4.0% to 23.0% or less, 4.5% to 23.0% or less, 5.0% to 23.0% or less,
0.1% to 22.0% or less, 0.5% to 22.0% or less, 1.0% to 22.0% or less, 1.5% to 22.0% or less, 2.0% to 22.0% or less, 2.5% to 22.0% or less, 3.0% to 22.0% or less, 3.5% to 22.0% or less, 4.0% to 22.0% or less, 4.5% to 22.0% or less, 5.0% to 22.0% or less, smaller than the area of the positive electrode current collector, but not limited thereto.

In one example of the present invention, in the positive electrode for a lithium secondary battery, the positive electrode composite layer is spaced inwardly from at least one periphery of the positive electrode current collector.

In one example of the present invention, the positive electrode current collector comprises a laminated area (300) in which the positive electrode composite layer is stacked and a surplus area (400) in which the positive electrode composite layer is not stacked.

The surplus area (400) may be disposed along at least a portion of the perimeter of the laminated area (300).

The positive electrode current collector comprises a first side on which a positive electrode terminal portion is disposed, a second side formed on the other side of the first side, a third side and a fourth side connecting the first and second sides, and a surplus area formed to include at least one side of the first to fourth sides.

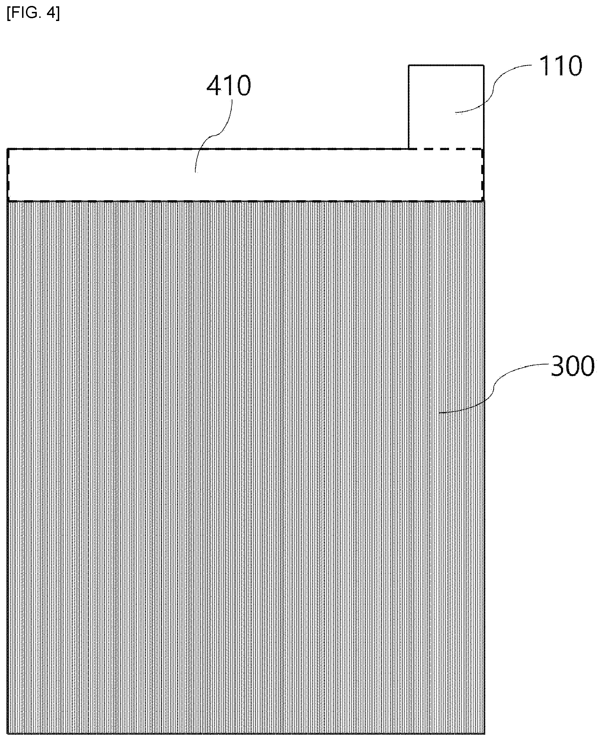

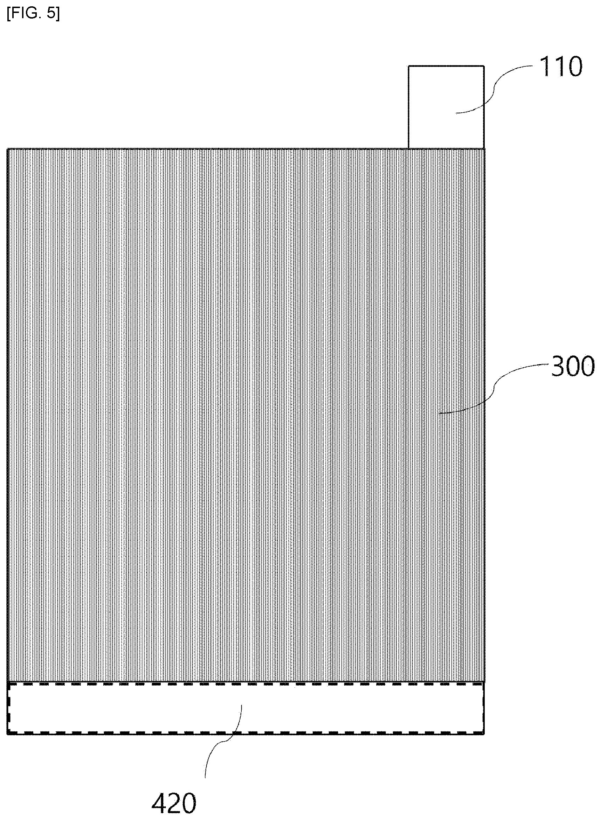

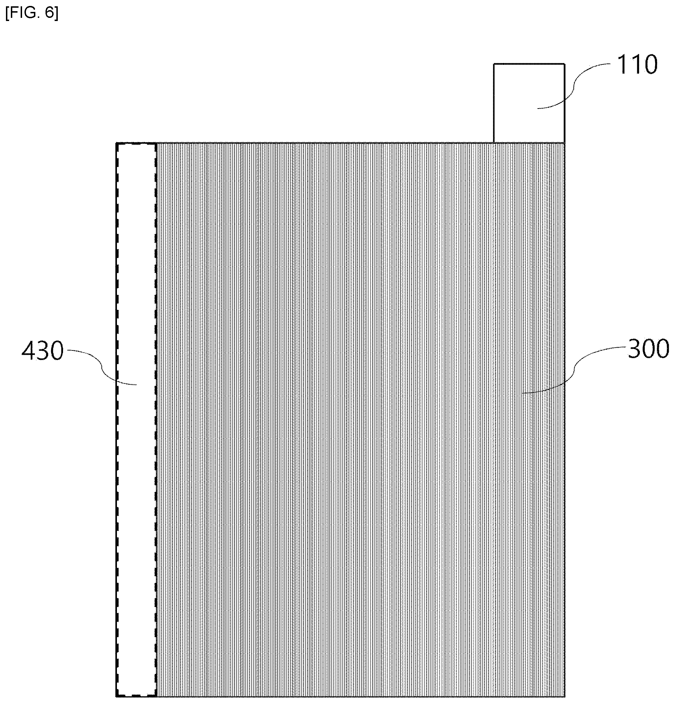

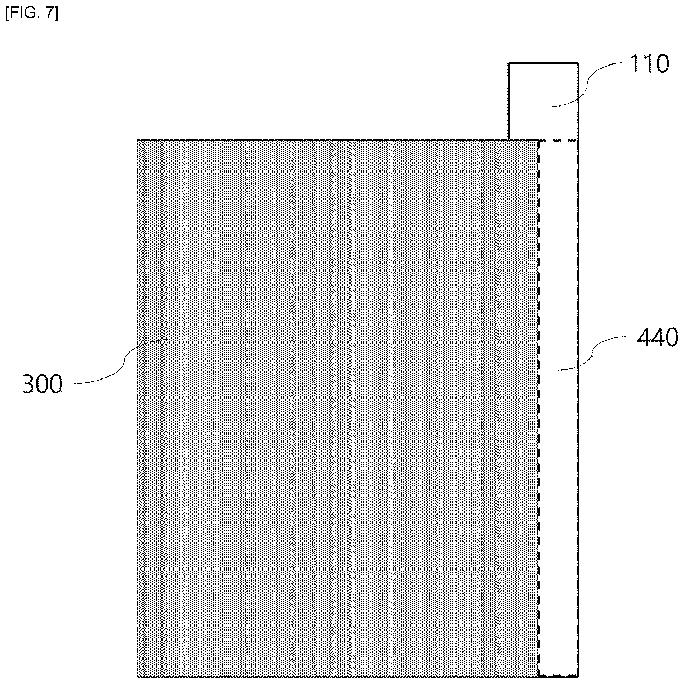

FIGs. 4 to 7 are drawings depicting the arrangement of a positive electrode composite layer in a positive electrode for a lithium secondary battery according further examples of the present invention.

The positive electrode current collector may include a first surplus area (410) formed to include a first side where the positive electrode terminal portion (110) is disposed.

The positive electrode current collector may include a second surplus area (420) formed to include a second side formed on the other side of the first side.

The positive electrode current collector may include a third surplus area (430) formed to include a third side connecting the first and second sides.

The positive electrode current collector may include a fourth surplus area (440) formed to connect the first and second sides, and to include a fourth side formed on the other side of the third side.

The surplus area (400) may include at least one of the first surplus area (410), the second surplus area (420), the third surplus area (430), and the fourth surplus area (440).

In one example of the present invention, the surplus area (400) may include any one of the first surplus area (410), the second surplus area (420), the third surplus area (430), and the fourth surplus area (440).

Although not shown, in one example of the present invention, the surplus area (400) may include two surplus areas. For example, the surplus area (400) may include a first surplus area (410) and a second surplus area (420); a first surplus area (410) and a third surplus area (430); a first surplus area (410) and a fourth surplus area (440); a second surplus area (420) and a third surplus area (430); a second surplus area (420) and a fourth surplus area (440); or a third surplus area (430) and a fourth surplus area (440).

Although not shown, in one example of the present invention, the surplus area (400) may include three surplus areas. For example, the surplus area (400) may include a first surplus area (410), a second surplus area (420), and a third surplus area (430); a first surplus area (410), a second surplus area (420), and a fourth surplus area (440); a first surplus area (410), a third surplus area (430), and a fourth surplus area (440); or a second surplus area (420), a third surplus area (430), and a fourth surplus area (440).

Although not shown, in one example of the present invention, the surplus area (400) may include four surplus areas. That is, the surplus area (400) may include all of the first surplus area (410), the second surplus area (420), the third surplus area (430), and the fourth surplus area (440).

In one example of the present invention, the center point of the positive electrode current collector area is aligned with the center point of the positive electrode composite layer area.

In one example of the present invention, the positive electrode composite layer may comprise a positive electrode current collector and a positive electrode active material applied to one or both sides of the positive electrode current collector.

The positive electrode current collector is intended for the support of the positive electrode active material and is not particularly limited as long as it has good conductivity and is electrochemically stable in the voltage range of the lithium secondary battery. For example, the positive electrode current collector may be any metal selected from the group consisting of copper, aluminum, stainless steel, titanium, silver, palladium, nickel, alloys thereof, and combinations thereof, wherein the stainless steel may be surface treated with carbon, nickel, titanium, or silver, and the alloy may preferably be an aluminum-cadmium alloy, but may also be a non-conductive polymer whose surface is treated with calcined carbon or a conductive material, or a conductive polymer.

The positive electrode current collector can form microscopic irregularities on its surface to strengthen the binding force with the positive electrode active material, and various forms can be used, such as films, sheets, foils, meshes, nets, porous bodies, foams, non-woven bodies, etc.

The positive electrode active material may comprise a positive electrode active material and optionally a conductive material and a binder.

The positive electrode active material may vary depending on the type of all-solid-state battery. For example, the positive electrode active material may include, but not limited to, a layered compound such as lithium cobalt oxide (LiCoO₂), or lithium nickel oxide (LiNiO₂), or a compound substituted with one or more transition metals; a lithium manganese oxide such as Li₁₊ₓMn₂₋ₓO₄ (wherein 0≤x≤0.33), LiMnO₃, LiMn₂O₃, or LiMnO₂; a lithium copper oxide (Li₂CuO₂); a vanadium oxide, such as LiV₃O₈, V₂O₅, or Cu₂V₂O₇; Ni site-type lithium nickel compound represented by LiNi₁₋ₓMₓO₂ (wherein M is Co, Mn, Al, Cu, Fe, Mg, B or Ga; and 0.01≤x≤0.3); a lithium manganese complex oxide represented by LiMn₂₋ₓMₓO₂ (wherein M is Co, Ni, Fe, Cr, Zn or Ta; and 0.01≤x≤0.1) or Li₂Mn₃MO₈ (wherein M is Fe, Co, Ni, Cu or Zn); a lithium manganese complex oxide with spinel structure, represented by LiNiₓMn₂₋ₓO₄; LiCoPO₄; LiFePO₄; elemental sulfur (S₈); a sulfur-based compound such as Li₂Sn (wherein n is 1), an organosulfur compound or a carbon-sulfur polymer ((C₂Sₓ)n, wherein x is 2.5 to 50, and n is 2).

The conductive material is a material that electrically connects the electrolyte and the positive electrode active material and serves as a pathway for electrons to move from the current collector to the positive electrode active material, and can be used without restriction as long as it does not cause chemical changes in the lithium secondary battery and has porosity and conductivity.

For example, porous carbon-based materials can be used as the conductive material, wherein carbon-based material includes carbon black, graphite, graphene, activated carbon, and carbon fiber; and metallic fibers such as metal mesh; metallic powders such as copper, silver, nickel, or aluminum; or organic conductive materials such as polyphenylene derivatives. The conductive materials may be used alone or in combination.

Currently commercially available products as a conductive material include Acetylene Black (from Chevron Chemical Company or Gulf Oil Company), Ketjen Black EC (from Armak Company), Vulcan XC-72 (from Cabot Company), and Super P (from MMM). Examples may include acetylene black, carbon black, and graphite.

Further, the positive electrode composite layer may further comprise a binder, wherein the binder further increases the cohesion between the components comprised of the positive electrode composite layer, or between the components and the current collector, and any binder known in the art may be used.

For example, the binder may be one or a mixture or copolymer of two or more selected from the group consisting of a fluoroplastic binder comprising polyvinylidenefluoride (PVdF) or polytetrafluoroethylene (PTFE); a rubber-based binder comprising styrene butadiene rubber (SBR), acrylonitrile-butadiene rubber, or styrene-isoprene rubber; a cellulosic binder, including carboxyl methyl cellulose (CMC), starch, hydroxypropyl cellulose, and regenerated cellulose; a polyalcoholic binder; a polyolefin binder, including polyethylene or polypropylene; a polyimide binder; a polyester binder; and a silane binder.

In one example of the present invention, the lithium secondary battery may include a positive electrode, a negative electrode, and a solid electrolyte interposed therebetween, wherein the positive electrode may be the positive electrode for a lithium secondary battery of the present invention described above.

The negative electrode may comprise a negative electrode current collector and a negative electrode active material located on the negative electrode current collector. Further, the negative electrode, like the positive electrode, may comprise a conductive material and a binder as desired. The negative electrode current collector, conductive material, and binder are as described above.

The negative electrode active material can be any material that can reversibly intercalate or deintercalate lithium ions (Li+), and any material that can react with lithium ions to reversibly form lithium-containing compounds.

The solid electrolyte may comprise at least one selected from the group consisting of a sulfide-based solid electrolyte, a polymer-based solid electrolyte, and an oxide-based solid electrolyte, preferably a sulfide-based solid electrolyte. The solid electrolyte may be in the form of particles.

The sulfide-based solid electrolyte contains sulfur (S) and exhibits ionic conductivity of a metal belonging to Group 1 or 2 of the periodic table, and it may include a Li-P-S-based glass or a Li-P-S-based glass-ceramic.

The polymeric solid electrolyte is a composite of a lithium salt and a polymeric resin, that is, a polymeric electrolyte material in the form formed by the addition of a polymeric resin to a solvated lithium salt, and may exhibit an ionic conductivity of about 1x10⁻⁷ S/cm or more, preferably about 1x10⁻⁵ S/cm or more.

The oxide-based solid electrolyte may comprise oxygen (O) and have the ionic conductivity of a metal belonging to Group 1 or 2 of the periodic table.

### EXAMPLES

Hereinafter, preferred examples are described for the purpose of illustrating the present invention, but it will be apparent to those skilled in the art that various changes and modifications are possible within the scope of the invention and the technical idea, and that such changes and modifications fall within the scope of the appended patent claims.

### Example 1

A positive electrode was manufactured by using an aluminum electrode as a positive electrode current collector, laminating a 142 µm thick positive electrode composite layer on the electrode current collector, and isostatically pressing (WIP) the laminate with an area of 400 mm² for the electrode current collector and 360 mm² for the positive electrode composite layer at 5000 bar and 80°C.

### Example 2

The positive electrodes were prepared in the same way as those prepared in Example 1, except that the area of the positive electrode composite layer was 320 mm².

### Comparative Example 1

The positive electrode was prepared in the same way as that prepared in Example 1, except that the area of the positive electrode current collector was 400 mm² and the area of the positive electrode composite layer was 400 mm².

### Comparative Example 2

The positive electrode was prepared in the same way as that prepared in Example 1, except that the area of the positive electrode composite layer was 280 mm².

### Experimental Example 1: Comparison of length and area of the positive electrode composite layer before and after isostatic pressure

The change in length or width of the positive electrode composite layer in the positive electrode of Example 1 and Comparative Example 1 before and after isostatic pressure was measured. The results are shown in Table 1 below.

**Table 1**

| | Before isostatic pressure | | After isostatic pressure | |
|---|---|---|---|---|
| | Length ratio (%) | Width ratio (%) | Length ratio (%) | Width ratio (%) |
| Example 1 | 100 | 100 | 100.5 | 101.1 |
| Comparative Example 1 | 100 | 100 | 101.5 | 103.0 |

As shown in Table 1 above, the positive electrodes prepared in Example 1 and Comparative Example 1 both showed an increase in the positive electrode compound layer after the isostatic pressure process. After isostatic pressure, the positive electrode composite layer increased in the range of 0.1 to 2.0% of the length before isostatic pressure and in the range of 1.0 to 4.0% of the area before isostatic pressure.

### Experimental Example 2: Cell performance data by area ratio

The area and capacity retention of the positive electrode composite layer after isostatic pressure of the positive electrode composite layer in the positive electrode of Examples 1, 2 and Comparative Examples 1, 2 were measured. The results are shown in Table 2 below.

**Table 2**

| | Area of the positive electrode composite layer after isostatic pressure (mm²) | Capacity retention (%) |
|---|---|---|
| Example 1 | 364.0 | 150 |
| Example 2 | 323.8 | 150 |
| Comparative Example 1 | 412.0 | 100 |
| Comparative Example 2 | 283.1 | 50 |

As shown in Table 2 above, for Examples 1 and 2, where the positive electrode composite layer has an area that is smaller than the area of the positive electrode current collector by more than 0% to less than 30%, good capacity retention was observed. On the other hand, in the case of Comparative Examples 1 and 2, where the area of the positive electrode composite layer is the same as or 30% smaller than the area of the positive electrode current collector, it was found that the capacity retention rate was significantly worse than those of Examples 1 and 2.

While examples of the present invention have been described above, it is not intended to limit the present invention to the above described examples. Those skilled in the art will be able to practice examples of the present invention with suitable modifications, including omitting, changing, substituting, or adding other configurations of all or some of the components of the present invention, with reference to this specification and the accompanying drawings, without departing from the technical ideas of the present invention.

The terms and expressions used herein are to be interpreted broadly and should not be construed in a restrictive sense. In this specification, the expression "including" does not exclude the presence or addition of one or more other components in addition to the mentioned configuration.

In this specification, singular expressions include plural unless the context expressly excludes them.

Each of the exemplary examples described herein can be combined with each other, and unless contradicted, what is described in a particular example may be equally applicable to other examples, even if not described in the other examples.

### [Reference Numerals]

- 100:: Positive electrode current collector
- 110:: Positive electrode terminal portion
- 200:: Positive electrode composite layer
- 300:: Laminated area
- 400:: Surplus area
- 410:: First surplus area
- 420:: Second surplus area
- 430:: Third surplus area
- 440:: Fourth surplus area

## Claims

1. positive electrode comprising for a lithium secondary battery a positive electrode current collector; and
a positive electrode composite layer laminated to the positive electrode current collector,
wherein the positive electrode composite layer has a smaller area than the positive electrode current collector.

2. The positive electrode for a lithium secondary battery according to claim 1,
wherein the positive electrode composite layer has an area that is more than 0% to less than 30% smaller than the area of the positive electrode current collector.

3. The positive electrode for a lithium secondary battery according to claim 1,
wherein the positive electrode composite layer is spaced inwardly from at least one periphery of the positive electrode current collector.

4. The positive electrode for a lithium secondary battery according to claim 1,
wherein the positive electrode current collector comprises a laminated area where the positive electrode composite layer is laminated; and
a surplus area where the positive electrode composite layer is not stacked.

5. The positive electrode for a lithium secondary battery according to claim 4,
wherein the surplus area is disposed along at least a portion of a perimeter of the laminated area.

6. The positive electrode for a lithium secondary battery according to claim 4,
wherein the positive electrode current collector comprises a first side on which a positive electrode terminal portion is disposed, a second side formed on a side opposite to the first side, and a third side and a fourth side connecting the first and second sides,
wherein the surplus area is formed to include at least one side of any of the first to fourth sides.

7. The positive electrode for a lithium secondary battery according to claim 1,
wherein a center point of the positive electrode current collector is aligned with a center point of the positive electrode composite layer.

8. The positive electrode for a lithium secondary battery according to claim 1,
wherein the positive electrode composite layer comprises a positive electrode active material, a conductive material, and a binder.

9. The positive electrode for a lithium secondary battery according to claim 1,
wherein the positive electrode current collector is at least one metal selected from the group consisting of copper, aluminum, stainless steel, titanium, silver, palladium, nickel, alloys thereof, and combinations thereof.

10. A lithium secondary battery comprising a positive electrode for a lithium secondary battery according to any one of claims 1 to 9;
a negative electrode; and
a solid electrolyte interposed between them.
